# EUROPEAN PATENT APPLICATION

(11) **EP 3 705 424 A1**
(43) Date of publication of application: **09.09.2020**
(21) Application number: 18872402.5
(22) Date of filing: 27.04.2018
(51) Int. Cl.: B65G 13/12, B65G 41/00

(54) **BIDIRECTIONAL CONVEYING APPARATUS**

(30) Priority: 30.10.2017 CN 201711052493
(71) Applicant: Nio Nextev Limited, Central, Hong Kong (CN)
(72) Inventor: BENGTSSON, Jan, Shanghai 201804 (CN); LI, Nan, Shanghai 201804 (CN); TIAN, Xiaotao, Shanghai 201804 (CN); DING, Xikun, Shanghai 201804 (CN); MA, Yongyue, Shanghai 201804 (CN)
(74) Representative: Vossius & Partner Patentanwälte Rechtsanwälte mbB
(86) International application number: PCT/CN2018/084890
(87) International publication number: WO 2019/085418

(57) **Abstract**

Disclosed is a bidirectional conveying apparatus, comprising: a first conveying part (10) and a second conveying part (20) both configured to convey a material, a conveying direction of the first conveying part (10) being different from a conveying direction of the second conveying part (20), wherein the second conveying part (20) has a first position lower than the first conveying part (10) and a second position higher than the first conveying part (10), when the second conveying part (20) is in the first position, the first conveying part (10) is configured to support and convey a material, and when the second conveying part (20) is in the second position, the second conveying part (20) is configured to support and convey a material; and an elevation mechanism (30), connected to the second conveying part (20) to drive the second conveying part (20) to move between the first position and the second position. By using the bidirectional conveying apparatus, the bidirectional conveyance of materials can be achieved, so that the efficiency of exchanging materials is improved, the operation time is reduced, and the occupied space is reduced.

## Description

### Technical Field

The invention relates to the technical field of conveying apparatuses, and in particular to a bidirectional conveying apparatus.

### Background Art

Materials need to be conveyed between storage locations in an automated production line. Especially when a battery pack is swapped off an electric vehicle, the battery pack needs to be conveyed among a storage location, a battery swap platform, and a charging platform.

During the conveyance of the battery pack, a swapping direction of a battery pack transfer trolley may be inconsistent with a conveying direction of a battery pack charging area, resulting in problems regarding limited space and transportation convenience of battery packs.

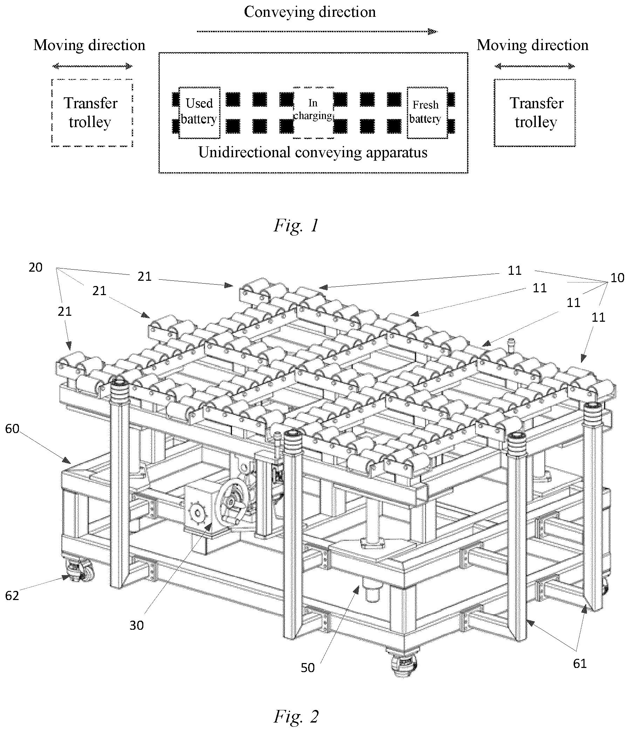

Fig. 1 is a schematic diagram of swapping battery packs by using a unidirectional conveying apparatus. For the unidirectional conveying apparatus for battery packs shown in Fig. 1, a single-row roller conveying line is used. Accordingly, materials are conveyed unidirectionally, large space is occupied, and the flexibility is poor. Moreover, when battery packs of an electric vehicle are manually swapped, a transfer trolley needs to deliver a used battery pack from an entrance and then receive a fresh battery pack from an exit, so that a battery swapping process is very complex.

### Summary of the Invention

The objective of the invention is to overcome the defects of the existing conveying apparatus and provide a novel bidirectional conveying apparatus. The technical problem to be solved is to enable the conveying apparatus to perform bidirectional conveyance and improve the efficiency of exchanging materials.

The following technical solutions are used to achieve the objective of the invention and address the technical problems to be solved. The bidirectional conveying apparatus proposed in the invention comprises: a first conveying part and a second conveying part both configured to convey a material, a conveying direction of the first conveying part being different from a conveying direction of the second conveying part, wherein the second conveying part has a first position lower than the first conveying part and a second position higher than the first conveying part, when the second conveying part is in the first position, the first conveying part is configured to support and convey a material, and when the second conveying part is in the second position, the second conveying part is configured to support and convey a material; and an elevation mechanism, connected to the second conveying part to drive the second conveying part to move between the first position and the second position.

The following technical measures may also be used to further achieve the objective of the invention and solve the technical problem of the invention.

In the foregoing bidirectional conveying apparatus, the first conveying part comprises a plurality of first conveying units having the same conveying direction, and the plurality of first conveying units are located at the same height and are arranged at intervals; the second conveying part comprises a plurality of second conveying units having the same conveying direction, and the plurality of second conveying units are located at the same height, are arranged at intervals, and ascend or descend synchronously; and the plurality of first conveying units and the plurality of second conveying units are disposed alternately.

In the foregoing bidirectional conveying apparatus, the first conveying units and/or the second conveying units comprise a plurality of rollers having the same conveying direction.

The foregoing bidirectional conveying apparatus further comprises an elevation limiting mechanism, configured to: prevent further operation of the elevation mechanism to limit the second conveying part at the first position when the second conveying part descends to the first position, and prevent further operation of the elevation mechanism to limit the second conveying part at the second position when the second conveying part ascends to the second position.

In the foregoing bidirectional conveying apparatus, the elevation mechanism comprises a cam, and the cam acts on the second conveying part to drive the second conveying part to ascend or descend.

The foregoing bidirectional conveying apparatus further comprises a base, wherein the limiting mechanism comprises a first limiting member connected to the base, and a second limiting member connected to the elevation mechanism and rotating synchronously with the cam; the second limiting member comprises a sector-shaped block having a first side face and a second side face spaced apart from each other in a circumferential direction of the cam; when the second conveying part moves to the first position, the first side face abuts against the first limiting member; and when the second conveying part moves to the second position, the second side face abuts against the first limiting member, so as to prevent further operation of the elevation mechanism by the abutment.

The foregoing bidirectional conveying apparatus further comprises an elevation guiding mechanism configured to guide the second conveying part to move between the first position and the second position.

The foregoing bidirectional conveying apparatus further comprises a base connected to the first conveying part, wherein the elevation guiding mechanism comprises a sliding member and a fixed member, the sliding member is connected to the second conveying part, the fixed member is connected to the base, and the sliding member can slide in an elevation direction of the second conveying part along the fixed member.

The foregoing bidirectional conveying apparatus further comprises a stop member, which is disposed at the end, in the corresponding conveying direction, of the first conveying part and/or the second conveying part and configured to prevent a material from sliding out in the conveying direction.

The following technical solution is further used to achieve the objective of the invention and address the technical problem to be solved. A battery pack storage platform proposed in the invention comprises any of the bidirectional conveying apparatuses described above for bidirectional docking with a plurality of battery swap trolleys.

The following technical solution is further used to achieve the objective of the invention and address the technical problem to be solved. A battery swap trolley proposed in the invention comprises any of the bidirectional conveying apparatuses described above, the bidirectional conveying apparatus being capable of moving a battery pack into or out from the battery swap trolley in a plurality of directions.

The following technical solution is further used to achieve the objective of the invention and address the technical problem to be solved. A conveying line of a battery swap platform proposed in the invention comprises any of the bidirectional conveying apparatuses described above for achieving bidirectional conveyance of a battery pack.

By means of the above-mentioned technical solutions, the bidirectional conveying apparatus of the invention provides two conveying parts having different conveying directions and an elevation mechanism configured to switch between two conveying parts for material conveyance, such that bidirectional conveyance of materials is achieved, thus the efficiency of exchanging materials is improved, the operation time is reduced, the structure is simple, and the occupied space can be reduced.

The aforementioned description is only an overview of the technical solutions of the invention. In order to clearly understand the technical means of the invention, the invention can be implemented according to the contents of the description; and in order to make the aforementioned and other objects, features and advantages of the invention more obvious and understandable, preferred embodiments are described in detail below with reference to the accompanying drawings.

### Brief Description of the Drawings

Fig. 1 is a schematic diagram showing the principle of swapping battery packs by using a unidirectional conveying apparatus.
Fig. 2 is a three-dimensional schematic structural diagram of a bidirectional conveying apparatus according to an embodiment of the invention.
Fig. 3 is a schematic structural planar side view of a bidirectional conveying apparatus according to an embodiment of the invention.
Fig. 4 is a three-dimensional schematic structural diagram of an elevation mechanism and an elevation limiting mechanism of a bidirectional conveying apparatus according to an embodiment of the invention.
Fig. 5 is a three-dimensional schematic structural diagram of a bidirectional conveying apparatus and a battery pack according to an embodiment of the invention.
Fig. 6 is a schematic diagram showing the principle of swapping battery packs by using a bidirectional conveying apparatus according to an embodiment of the invention.

**[Description of Symbols]**

| | |
|---|---|
| 10: First conveying part | 20: Second conveying part |
| 30: Elevation mechanism | 40: Elevation limiting mechanism |
| 50: Elevation guiding mechanism | 60: Base |
| 61: Stop member | 62: Pulley |
| 11: First conveying unit | 21: Second conveying unit |
| 31: Cam | 32: Driven member |
| 33: Transmission shaft | 34: Hand wheel |
| 35: Speed reducer | 36: Bearing block |
| 41: First limiting member | 42: Second limiting member |
| 51: Sliding member | 52: Fixed member |
| 70: Battery pack | |

### Detailed Description of Embodiments

In order to further illustrate the technical means used to achieve the intended purpose of the invention and the technical effects of the invention, the particular embodiments, structures, and features of a bidirectional conveying apparatus proposed in the invention and the effects thereof are described in detail hereinafter in conjunction with the accompanying drawings and the preferred embodiments.

The bidirectional conveying apparatus of the invention is applicable to, but not limited to, the conveyance of battery packs or a battery swap system, but instead, is applicable to the conveyance of various materials.

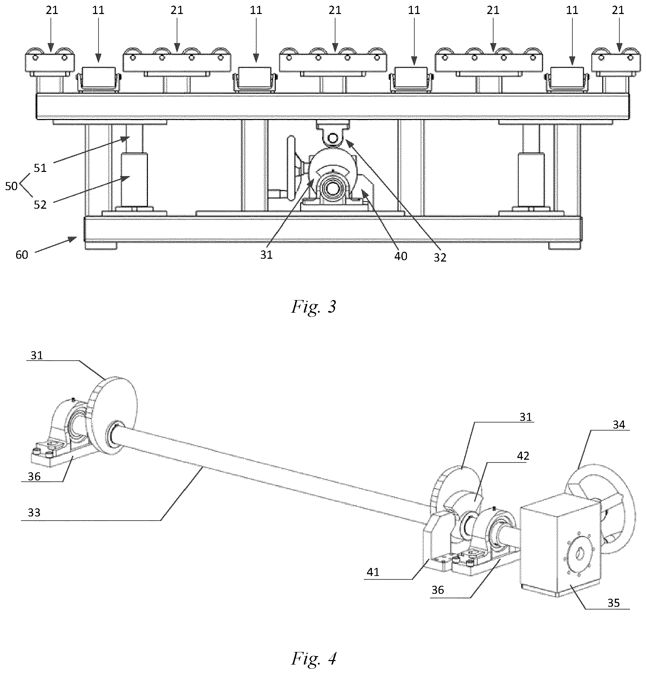

Fig. 2 is a three-dimensional schematic structural diagram of a bidirectional conveying apparatus in an example of the invention. Fig. 3 is a schematic structural planar side view of a bidirectional conveying apparatus in an example of the invention. Fig. 4 is a three-dimensional schematic structural diagram of an elevation mechanism and an elevation limiting mechanism of a bidirectional conveying apparatus in an example of the invention. Referring to Figs. 2, 3 and 4, the bidirectional conveying apparatus according to the examples of the invention comprises: a first conveying part 10, a second conveying part 20 and an elevation mechanism 30. The first conveying part 10 and the second conveying part 20 having different conveying directions are disposed, and the elevation mechanism 30 is used to change the relative height between the first conveying part 10 and the second conveying part 20 to switch a conveying direction of a material, thereby achieving bidirectional conveyance. The bidirectional conveying apparatus may also comprise one or some of an elevation limiting mechanism 40, an elevation guiding mechanism 50, and a base 60.

Specifically, the first conveying part 10 and the second conveying part 20 are both used to convey the material. The conveying direction of the first conveying part 10 is different from the conveying direction of the second conveying part 20. For example, the conveying directions of the two can be perpendicular to each other. The first conveying part 10 and the second conveying part 20 can both use any mechanism such as a roller mechanism or a belt mechanism that can achieve the conveyance of a material. Both the first conveying part 10 and the second conveying part 20 can be actively driven by an electric motor, or passively driven without the electric motor, or manually driven, etc.

The second conveying part 20 has a first position and a second position; when the second conveying part 20 is in the first position, the height thereof from the ground is less than the height of the first conveying part 10 from the ground. In this case, the first conveying part 10 is used to support and convey a material, and the material can move in the conveying direction of the first conveying part 10 by coming into contact with the first conveying part 10; and when the second conveying part 20 is in the second position, the height thereof from the ground is greater than the height of the first conveying part 10 from the ground. In this case, the second conveying part 20 is used to support and convey the material and enable same to move in the conveying direction of the second conveying part 20. It should be noted that the first conveying part 10 can be connected to the base 60 to have a fixed height from the ground, and can also move to change the height from the ground, provided that the second conveying part 20 is lower than the first conveying part 10 when in the first position and higher than the first conveying part 10 when in the second position.

The first conveying part 10 may comprise a plurality of first conveying units 11 having the same conveying direction. The plurality of first conveying units 11 are located at the same height and are arranged at intervals. The second conveying part 20 may comprise a plurality of second conveying units 21 having the same conveying direction. The plurality of second conveying units 21 are located at the same height, are arranged at intervals, and ascend or descend synchronously. In an example, the first conveying units 11 are all connected to the base 60 and are disposed in the same plane (or having the same height from the ground). The second conveying units 21 are all connected to one beam and are disposed in the same plane (or having the same height from the ground). Therefore, the height of the first conveying units 11 can remain unchanged and the height of the second conveying units 21 can change synchronously during the position switching of the second conveying part 20. The specific number of the first conveying units 11 or the second conveying units 21 depends on the size of a material and conveying distances required in two directions. The plurality of first conveying units 11 and the plurality of second conveying units 21 may be disposed alternately. The plurality of second conveying units may be distributed between adjacent first conveying units. Alternatively, the plurality of first conveying units may be distributed between adjacent second conveying units. In a specific embodiment, the plurality of first conveying units 11 are disposed at intervals. A plurality of second conveying units 21 are disposed at intervals in a conveying direction of the first conveying units 11 between two adjacent first conveying units 11, and conveying directions of all the second conveying units 21 are set to be perpendicular to the conveying directions of the first conveying units 11.

In an embodiment, one, some or all of the first conveying units 11 and/or the second conveying units 21 comprise a plurality of rollers having the same conveying direction; and one or more roller carriers may be used to set the rollers belonging to one and the same conveying unit to have the same conveying direction and the same height. The width of each of the rollers should adapt to a material to be conveyed. The roller may have a relatively large width for a material with a relatively large volume, and in this case, the roller has a shape similar to that of a drum.

The elevation mechanism 30 is connected to the second conveying part 20 to drive the second conveying part 20 to move between the first position and the second position. The elevation mechanism 30 may use any mechanism such as a cam mechanism, a crankshaft mechanism, a support rod mechanism or a cylinder that can change the relative height between the second conveying part 20 and the first conveying part 10. Moreover, the elevation mechanism 30 may be manually or electrically driven to ascend or descend. For example, the elevation mechanism 30 may be a cam mechanism, which comprises a cam 31. The cam 31 acts on the second conveying part 20 to drive the second conveying part 20 to ascend or descend. The cam 31 may directly act on the second conveying part 20 or may act on a driven member 32 connected to the second conveying part 20 to enable the driven member 32 to rotate along with the cam 31 to change the height, so as to enable the second conveying part 20 to switch between the first position and the second position.

Specifically, referring to Fig. 3 and Fig. 4, in an example, the elevation mechanism 30 is the cam mechanism and mainly comprises: the cam 31, a transmission shaft 33, a hand wheel 34 and a speed reducer 35.

The cam 31 is connected to the transmission shaft 33. The cam 31 acts on the second conveying part 20 and is driven by the transmission shaft 33 to rotate, so as to drive the second conveying part 20 to ascend or descend. The contour line of the cam 31 may have various forms, provided that the second conveying part 20 can switch between the first position and the second position as the cam drives the second conveying part 20 to ascend or descend. The direction of a plane formed by the contour line of the cam 31 may be set to be perpendicular to the ground. The cam 31 may be a disc-shaped cam, and the disc surface is set to be perpendicular to the ground.

The elevation mechanism 30 may further comprise a driven member 32. An upper end of the driven member is connected to the second conveying part 20. A lower end of the driven member is in contact with the contour line of the cam 31, so that the height of the driven member 32 can be changed along with the rotation of the cam 31, thereby enabling the second conveying part 20 to switch between the first position and the second position. The driven member 32 may be a rod-shaped roller driven member, with the lower end thereof being provided with a bearing roller in contact with the contour line of the cam 31. Optionally, the moving direction of the driven member 32 can be guided, so that the direction in which the driven member can move is the same as the moving direction of the second conveying part 20 during position switching. Specifically, the rod-shaped driven member 32 may be limited by passing through a through hole of the base 60, or may be limited as the second conveying part 20 is guided by the elevation guiding mechanism 50, such that the moving direction of the driven member 32 is guided to perform a vertical movement perpendicular to the ground along with the rotation of the cam 31, thereby enabling the second conveying part 20 to perform vertical movement perpendicular to the ground between the first position and the second position.

Optionally, there may be a plurality of cams 31. In an embodiment in which the driven member 32 is provided, a plurality of driven members 32 may be provided, and the number of the driven members is the same as that of the cams 31. For example, two cams 31 with consistent contour lines may be spaced apart from each other in a lengthwise direction of the transmission shaft 33. Two driven members 32 with consistent structures cooperate with the two cams 31 to enable the second conveying part 20 to switch more smoothly between the first position and the second position.

The transmission shaft 33 is connected to the cam 31, so that the lengthwise direction of the transmission shaft 33 may be perpendicular to a plane formed by the contour line of the cam 31 (if the cam 31 is a disc-shaped cam, the axial direction of the transmission shaft 33 is perpendicular to the disc surface of the cam 31). When the transmission shaft 33 is rotated, the cam 31 can be driven to rotate.

The hand wheel 34 is in transmission connection with the transmission shaft 33 to provide a torque to make the transmission shaft 33 rotate.

A speed reducer 35 may further be comprised. The hand wheel 34 is in transmission connection with the transmission shaft 33 through the speed reducer 35, to make it easier to provide a torque to make the transmission shaft 33 rotate. Specifically, the transmission shaft 33 may be coaxial with a shaft of the speed reducer, and the other output shaft of the speed reducer 35 is connected to the hand wheel 33.

The elevation mechanism 30 in this embodiment may further comprise a bearing block 36, which is configured to fix the transmission shaft 33 to the base 60. The bearing block 36 may be connected to the base 60 through a bolt to facilitate detachment.

It should be noted that the elevation mechanism 30 in the invention is not limited to the foregoing structure in which the elevation mechanism is manually driven to operate. Instead, the elevation mechanism 30 may comprise a switch and a corresponding circuit connected to the speed reducer 35, so that the elevation mechanism 30 can be electrically driven to operate.

The bidirectional conveying apparatus may further comprise an elevation limiting mechanism 40, configured to: limit further operation of the elevation mechanism 30 to limit the second conveying part 20 at the first position when the second conveying part 20 descends to the first position, and limit further operation of the elevation mechanism 30 to limit the second conveying part 20 at the second position when the second conveying part 20 ascends to the second position. The elevation limiting mechanism 40 may use mechanical limiting or electronic limiting.

In an example, the elevation mechanism 30 is a cam mechanism. The elevation limiting mechanism 40 uses mechanical limiting, and comprises a first limiting member 41 connected to the base 50 and a second limiting member 42 connected to the elevation mechanism 30 and rotating synchronously with the cam 31. For example, the second limiting member 42 may be fixedly connected to the cam 31 or in transmission connection with the transmission shaft 33, to rotate synchronously with the cam 31. Moreover, the second limiting member 42 comprises a sector-shaped block. The sector-shaped block has a first side face and a second side face spaced apart from each other in a circumferential direction of the cam 31. During synchronous rotation with the cam 31, when the second conveying part 20 moves to the first position, the first side face abuts against the first limiting member 41, and when the second conveying part 20 moves to the second position, the second side face abuts against the first limiting member 41. The second limiting member 42 abuts against the first limiting member 41 to prevent further operation of the elevation mechanism 30, thereby enabling the second conveying part 20 to stop at the corresponding first position or second position.

The bidirectional conveying apparatus may further comprise an elevation guiding mechanism 50, which is configured to guide the second conveying part 20 to move between the first position and the second position, so as to ensure that a material can smoothly ascend or descend during the position switching of the second conveying part 200. Specifically, the horizontal movement or rotation may be limited during the position switching of the second conveying part 20. For example, the movement of the second conveying part 20 may be limited to be a vertical movement perpendicular to the ground. The elevation guiding mechanism 50 comprises a sliding member 51 and a fixed member 52, which may be, for example, a slider and a fixed sleeve, or a guide rail and a slider. The sliding member 51 is connected to the second conveying part 20. The fixed member 52 is connected to the base 60. The sliding member 51 can slide in an elevation direction of the second conveying part 20 along the fixed member 52, and is configured to guide the movement of the second conveying part 20 between the first position and the second position to be movement along the fixed member 52, so that the elevation stability of the second conveying part 20 can be improved. There may be a plurality of sliding members 51 and fixed members 52, and the number of the sliding members should be the same as that of the fixed members. In an example, there are four sliding members 51 and four fixed members 52, and the lengthwise direction of the fixed members is set to be perpendicular to the ground, so as to further improve the elevation stability of the second conveying part 20.

It should be noted that, in addition to the foregoing example, in which the elevation guiding mechanism 50 is configured to guide the movement of the second conveying part 20 to be vertical movement perpendicular to the ground, the elevation guiding mechanism may further be configured to guide the movement of the second conveying part 20 to be an oblique movement. For example, instead of being vertically disposed, the fixed member 52 may be disposed obliquely to guide the second conveying part 20 to make an oblique linear movement in the lengthwise direction of the fixed member 52.

The bidirectional conveying apparatus may further comprise a base 60, which is configured to support other components of the bidirectional conveying apparatus. The bidirectional conveying apparatus may further have a stop member 61, which may be connected to the base 60 or the first conveying part 10 or the second conveying part 20, is disposed at the end, in the corresponding conveying direction, of the first conveying part 10 and/or the second conveying part 20, and is configured to stop the movement of a material on the bidirectional conveying apparatus at the place where the stop member 61 is provided, so as to prevent the material from sliding out in the conveying direction. A pulley 62 may be disposed at the bottom of the base 60 to facilitate the movement of the bidirectional conveying apparatus.

The bidirectional conveying apparatus of the invention may be used in a plurality of platforms or apparatuses of a battery swap system to convey a battery pack 70. The details are as follows.

The bidirectional conveying apparatus of the invention may be applied to a battery pack storage platform configured to store a battery pack for bidirectional docking with a plurality of battery swap transfer trolleys during the conveyance of a battery pack. Specifically, the invention further discloses a battery pack temporary storage platform, comprising a bidirectional conveying apparatus according to any one of the embodiments described above for bidirectional docking with the plurality of battery swap transfer trolleys.

The bidirectional conveying apparatus of the invention may be applied to a conveying line of a battery swap platform for bidirectional conveyance of a battery pack. Specifically, the invention further discloses a conveying line of a battery swap platform, comprising a bidirectional conveying apparatus according to any one of the embodiments described above for bidirectional conveyance of a battery pack.

The bidirectional conveying apparatus of the invention may be applied to a battery swap transfer trolley. Specifically, the invention further discloses a battery swap transfer trolley, comprising a bidirectional conveying apparatus according to any one of the embodiments described above to move a battery pack into or out from the battery swap trolley in a plurality of directions.

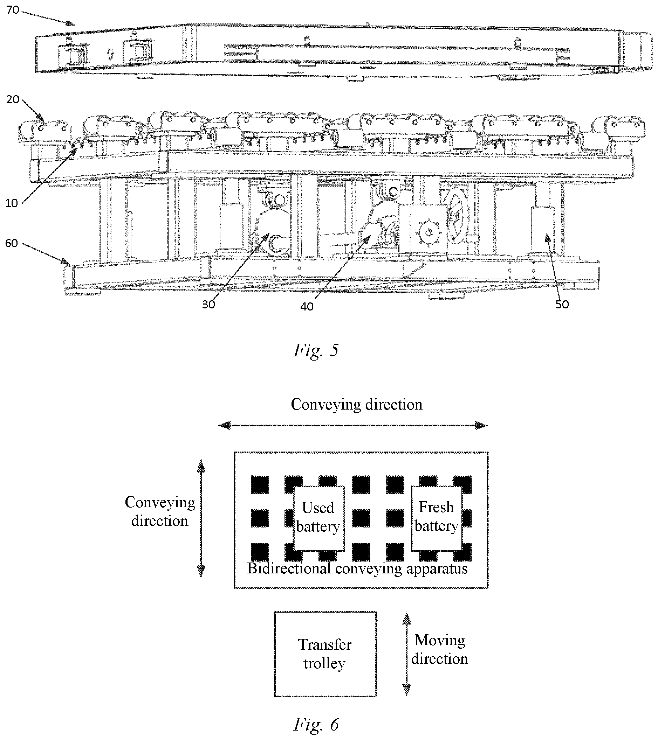

Fig. 5 is a three-dimensional schematic structural diagram of a bidirectional conveying apparatus and a battery pack according to the invention. Fig. 6 is a schematic diagram showing the principle of conveying a material by using the bidirectional conveying apparatus in an example of the invention. Referring to Fig. 2, Fig. 3, Fig. 4, Fig. 5, and Fig. 6, a specific method of conveying the battery pack 70 by using the bidirectional conveying apparatus in an example of the invention is as follows.

Before a battery pack 70 is conveyed, the hand wheel 34 is rotated to make the elevation mechanism 30 rotate, so as to drive the second conveying part 20 to descend to the first position. In this case, the height of the second conveying part 20 from the ground is lower than that of the first conveying part 10 from the ground.

Next, a transfer trolley approaches the bidirectional conveying apparatus. A used battery pack 70 comes into contact with the first conveying part 10 and moves from the transfer trolley to the bidirectional conveying apparatus in the conveying direction of the first conveying part 10.

Subsequently, the hand wheel 34 is rotated reversely to enable the elevation mechanism 30 to drive the second conveying part 20 to ascend to the first position. In this case, the height of the second conveying part 20 from the ground is higher than that of the first conveying part 10, so that the used battery pack 70 switches from the state of being in contact with the first conveying part 10 to the state of being in contact with the second conveying part 20.

Then, the used battery pack 70 is moved from the bidirectional conveying apparatus to a battery swap platform/charging platform in the conveying direction of the second conveying part 20.

After the battery swap platform/charging platform moves a fresh battery pack 70 to the bidirectional conveying apparatus through the contact with the second conveying part 20, the hand wheel 34 is rotated to enable the second conveying part 20 to descend from the second position to the first position, so that the fresh battery pack 70 switches from the state of being in contact with the second conveying part 20 to the state of being in contact with the first conveying part 10.

Eventually, the fresh battery pack 70 is moved from the bidirectional conveying apparatus to the transfer trolley in the conveying direction of the first conveying part 10, to complete the conveyance of the battery pack 70.

The foregoing descriptions are merely preferred embodiments of the invention, and are not intended to limit the invention in any form. Although the invention has been disclosed as above by means of the preferred embodiments, these embodiments are not for the purpose of limiting the invention. Those skilled in the art can make alterations or modifications to the technical contents disclosed above without departing from the technical solutions of the invention so as to arrive at equivalent embodiments with equivalent changes. However, any simple amendments, equivalent changes and modifications made to the above embodiments according to the technical essence of the invention without departing from the technical solutions of the invention are still within the scope of the technical solutions of the invention.

## Claims

1. A bidirectional conveying apparatus, **characterized by** comprising:
a first conveying part (10) and a second conveying part (20) both configured to convey a material, a conveying direction of the first conveying part (10) being different from a conveying direction of the second conveying part (20), wherein the second conveying part (20) has a first position lower than the first conveying part (10) and a second position higher than the first conveying part (10), when the second conveying part (20) is in the first position, the first conveying part (10) is configured to support and convey a material, and when the second conveying part (20) is in the second position, the second conveying part (20) is configured to support and convey a material; and
an elevation mechanism (30), connected to the second conveying part (20) to drive the second conveying part (20) to move between the first position and the second position.

2. The bidirectional conveying apparatus according to claim 1, **characterized in that** the first conveying part (10) comprises a plurality of first conveying units (11) having the same conveying direction, and the plurality of first conveying units (11) are located at the same height and are arranged at intervals; the second conveying part (20) comprises a plurality of second conveying units (21) having the same conveying direction, and the plurality of second conveying units (21) are located at the same height, are arranged at intervals, and ascend or descend synchronously; and the plurality of first conveying units (11) and the plurality of second conveying units (21) are disposed alternately.

3. The bidirectional conveying apparatus according to claim 2, **characterized in that** the first conveying units (11) and/or the second conveying units (21) comprise a plurality of rollers having the same conveying direction.

4. The bidirectional conveying apparatus according to claim 1, **characterized by** further comprising: an elevation limiting mechanism (40), configured to: prevent further operation of the elevation mechanism (30) to limit the second conveying part (20) at the first position when the second conveying part (20) descends to the first position, and prevent further operation of the elevation mechanism (30) to limit the second conveying part (20) at the second position when the second conveying part (20) ascends to the second position.

5. The bidirectional conveying apparatus according to claim 4, **characterized in that** the elevation mechanism (30) comprises a cam (31), and the cam (31) acts on the second conveying part (20) to drive the second conveying part (20) to ascend or descend.

6. The bidirectional conveying apparatus according to claim 5, **characterized by**
further comprising a base (60),
wherein the limiting mechanism (40) comprises a first limiting member (41) connected to the base (60), and a second limiting member (42) connected to the elevation mechanism (30) and rotating synchronously with the cam (31); the second limiting member (42) comprises a sector-shaped block having a first side face and a second side face spaced apart from each other in a circumferential direction of the cam (31); when the second conveying part (20) moves to the first position, the first side face abuts against the first limiting member (41); and when the second conveying part (20) moves to the second position, the second side face abuts against the first limiting member (41), so as to prevent further operation of the elevation mechanism (30) by the abutment.

7. The bidirectional conveying apparatus according to claim 1, **characterized by** further comprising: an elevation guiding mechanism (50), configured to guide the second conveying part (20) to move between the first position and the second position.

8. The bidirectional conveying apparatus according to claim 7, **characterized by**
further comprising: a base (60), connected to the first conveying part (10), wherein
the elevation guiding mechanism (50) comprises a sliding member (51) and a fixed member (52), the sliding member (51) is connected to the second conveying part (20), the fixed member (52) is connected to the base (60), and the sliding member (51) is slidable in an elevation direction of the second conveying part (20) along the fixed member (52).

9. The bidirectional conveying apparatus according to claim 1, **characterized by** further comprising: a stop member (61), disposed at the end, in a corresponding conveying direction, of the first conveying part (10) and/or the second conveying part (20), and configured to prevent a material from sliding out in the conveying direction.

10. A battery pack storage platform, **characterized by** comprising a bidirectional conveying apparatus according to any one of claims 1 to 9 for bidirectional docking with a plurality of battery swap trolleys.

11. A battery swap trolley, **characterized by** comprising a bidirectional conveying apparatus according to any one of claims 1 to 9, the bidirectional conveying apparatus being capable of moving a battery pack into or out from the battery swap trolley in a plurality of directions.

12. A conveying line of a battery swap platform, **characterized by** comprising a bidirectional conveying apparatus according to any one of claims 1 to 9 for achieving bidirectional conveyance of a battery pack.
nical essence of the invention without departing from the technical solutions of the invention are still within the scope of the technical solutions of the invention.
